# FASCICULE DE BREVET EUROPEEN

(11) **EP 1 964 772 B1**
(45) Date de publication et mention de la délivrance du brevet: **21.07.2010**
(21) Numéro de dépôt: 07291515.0
(22) Date de dépôt: 13.12.2007
(51) Int. Cl.: B64C 25/32, B64F 1/04, B64F 1/22

(54) **Procédé de gestion de la commande d'orientation d'un aéronef**
Verfahren zur Fahrwerkssteuerung eines Flugzeugs
Method for steering an aircraft landing gear

(30) Priorité: 27.02.2007 FR 0701410
(43) Date de publication de la demande: 03.09.2008
(73) Titulaire: MESSIER-BUGATTI, 78140 Vélizy Villacoublay (FR)
(72) Inventeur: Frank, David, 75013 Paris (FR)
(74) Mandataire: Parzy, Benjamin Alain

(56) Documents cités:
- EP-A1- 1 342 645
- GB-A- 837 891
- US-A- 2 919 933

## Description

L'invention concerne un procédé de gestion de la commande d'orientation au sol d'un aéronef.

### ARRIERE-PLAN DE L'INVENTION

Sur les aéroports, les aéronefs sont souvent remorqués par des tracteurs, notamment à proximité des aérogares. A cet effet, il est connu de relier un aéronef à un tracteur au moyen d'une barre accrochée à un point d'attache situé sur l'atterrisseur auxiliaire de l'aéronef, plus précisément sur la partie inférieure de celui-ci qui porte la ou les roues. Il est également connu de tracter l'aéronef au moyen d'un tracteur spécialement adapté à remorquer l'aéronef directement par les roues de l'atterrisseur auxiliaire. Pour permettre à la partie inférieure de l'atterrisseur de s'orienter sous l'effet des mouvements imposés par le tracteur, il importe de désolidariser en rotation cette partie inférieure du reste de l'aéronef.

Cette désolidarisation peut être obtenue en désolidarisant les branches du compas d'orientation reliant la partie inférieure à l'organe d'orientation des roues dont la fonction est d'orienter la ou les roues en réponse à un ordre d'orientation donné par le pilote. Cette méthode présente l'inconvénient de nécessiter l'intervention au plus près de l'atterrisseur auxiliaire d'un opérateur au sol, ce qui peut se révéler dangereux si le pilote active l'organe d'orientation de façon intempestive. En outre, il est parfois difficile de raccorder les branches du compas d'orientation entre elles lorsque le remorquage est terminé. De plus, l'opérateur au sol peut oublier de raccorder les branches du compas d'orientation à la fin du remorquage.

On peut également obtenir cette désolidarisation en désactivant la commande d'orientation, c'est-à-dire en plaçant la commande d'orientation dans un mode de libre orientation dans laquelle l'organe d'orientation devient passif et laisse libre une rotation de la partie inférieure de l'atterrisseur, ce qui évite de séparer les branches du compas d'orientation. Dans ce dernier cas, l'atterrisseur auxiliaire est en général équipé d'un levier de neutralisation qui est manoeuvré par un opérateur au sol pour placer la commande d'orientation en mode de libre orientation. Là encore, l'opérateur doit s'approcher au plus près de l'atterrisseur auxiliaire pour manoeuvrer le levier de neutralisation. En outre, le levier est porté par un organe de neutralisation disposé sur l'atterrisseur auxiliaire dans une zone exposée soumise aux intempéries et aux vibrations, qui peuvent conduire à une défaillance du levier ou du contacteur associé. Il se peut dès lors que le remorquage soit effectué alors que la commande d'orientation n'a pas été placée en mode de libre orientation, de sorte que la commande d'orientation non neutralisée tente de contrer toute orientation des roues provoquée par le tracteur remorquant l'aéronef pour maintenir les roues dans l'orientation commandée par la commande d'orientation, ce qui peut conduire à une détérioration de la barre de remorquage et de son attache sur l'atterrisseur auxiliaire, et en tout cas à une fatigue inutile de l'organe d'orientation. En outre, l'opérateur peut tout simplement oublier de manoeuvrer la commande de neutralisation, ce qui peut conduire aux mêmes inconvénients.

Pour palier ces inconvénients, on a pensé à placer le levier de neutralisation à l'abri, c'est-à-dire directement dans le cockpit de l'aéronef. Ainsi, le pilote lui-même manoeuvre le levier de neutralisation pour placer l'organe d'orientation en mode de libre orientation en vue de permettre le remorquage de l'aéronef. Mais le pilote peut également oublier de manoeuvrer le levier de neutralisation, ce qui conduit aux mêmes inconvénients. En outre, lorsque le pilote n'est pas dans l'aéronef, un deuxième opérateur doit s'installer aux commandes pour manoeuvrer le levier, ce qui n'est pas pratique.

L'état de l'art est également illustré par le document EP-A-1 342 645 qui divulgue une architecture de système hydraulique de commande d'orientation. La commande d'orientation est placée ici dans un mode de libre orientation lorsque le dispositif de génération de pression hydraulique est arrêté.

### OBJET DE L'INVENTION

L'invention vise à offrir une autre solution permettant d'éviter les inconvénients précités.

### BREVE DESCRIPTION DE L'INVENTION

En vue de la réalisation de ce but, on propose un procédé de gestion de la commande d'orientation selon la revendication 1.

Ainsi, la commande d'orientation est automatiquement placée en mode de libre orientation, lorsqu'une situation de remorquage est reconnue, de sorte que si un remorquage est effectué, celui-ci peut être réalisé sans risque de détérioration de la commande d'orientation. La commande est alors automatiquement réactivée dans que l'aéronef quitte la situation de remorquage, de sorte que le pilote est assuré de disposer de la commande d'orientation lors des manoeuvres de roulage de l'aéronef.

Le procédé permet ainsi de supprimer le levier et tous les inconvénients liés à l'utilisation du levier: manque de fiabilité, possibilité d'oubli de la part de l'opérateur... Ce procédé permet en outre d'éviter toute intervention de l'opérateur sur l'atterrisseur lui-même autre que l'éventuel accrochage de la barre de remorquage, ce qui est un gage de sécurité.

Selon un premier mode de mise en oeuvre, la situation de remorquage correspond à une situation de remorquage potentiel dans laquelle l'aéronef est susceptible d'être remorqué. De préférence, cette situation correspond à la détection de l'événement suivant: l'aéronef est à l'arrêt depuis un certain temps, et aucun freinage n'est commandé depuis un certain temps.

Selon un aspect particulier de l'invention, la commande d'orientation est réactivée en réponse à la détection d'un événement signalant la fin de la situation de remorquage, et de préférence lors de la survenance d'au moins l'un des évènements suivants:
- la poussée des moteurs est supérieure à un seuil prédéterminé;
- la vitesse de déplacement de l'aéronef est supérieure à un seuil prédéterminé;
- la vitesse angulaire commandée d'orientation est supérieure à un seuil prédéterminé;
- un freinage est commandé.

Ainsi, la commande d'orientation est réactivée de façon automatique dès qu'un événement signalant la fin de la situation de remorquage est détecté, de sorte que le pilote est assuré de retrouver toute autorité sur la commande d'orientation.

### BREVE DESCRIPTION DES DESSINS

L'invention sera mieux comprise à la lumière de la description qui suit en référence aux figures des dessins annexés parmi lesquelles :
- la figure 1 est une vue d'un atterrisseur auxiliaire auquel une barre de remorquage a été attachée ;
- la figure 2 est un schéma hydraulique d'une commande d'orientation hydraulique équipant l'atterrisseur de la figure 1;
- la figure 3 est un schéma d'une logique de passage de la commande d'orientation en mode de libre orientation selon un premier mode de mise en oeuvre du procédé de l'invention ;
- la figure 4 est une autre variante de la logique de la figure 3;
- la figure 5 est un schéma d'une logique de passage de la commande d'orientation en mode de libre orientation selon un deuxième mode de mise en oeuvre du procédé de l'invention.

### DESCRIPTION DETAILLEE DE L'INVENTION

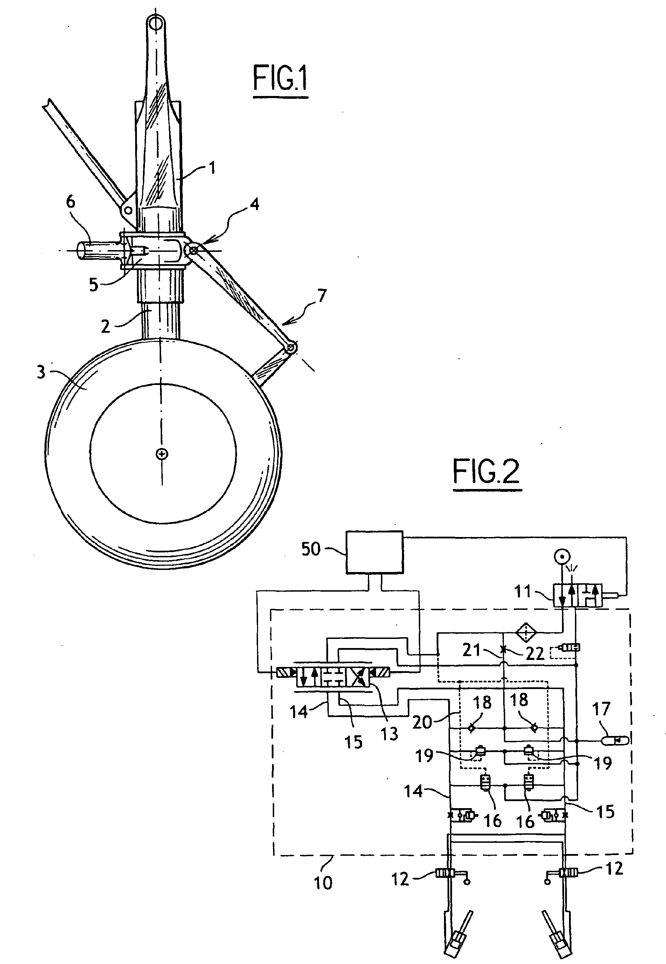

En référence à la figure 1, un atterrisseur auxiliaire d'aéronef comporte un caisson 1 relié directement à la structure de l'aéronef et dans lequel une tige 2 est montée pour coulisser télescopiquement et former avec le caisson un amortisseur. La tige 2 porte en partie basse deux roues 3. Le caisson 1 comporte un organe d'orientation 4 comportant un collier 5 monté tournant autour du caisson 1 et manoeuvré par des vérins d'orientation 6. Le collier 5 est relié à la tige 2 par un compas d'orientation 7 comportant deux branches articulées de sorte que la position angulaire de la tige 2 est déterminée par la position angulaire du collier 5. Pour orienter les roues 3, il suffit de commander les vérins d'orientation 6 pour faire tourner le collier 5, qui entraîne en rotation la tige 2 par l'intermédiaire du compas d'orientation 7. Pour commander les vérins d'orientation 6, l'aéronef est pourvu d'un circuit hydraulique d'alimentation des vérins illustré à la figure 2 qui, en réponse à un ordre du pilote, alimente sélectivement les vérins d'orientation 6 pour faire tourner le collier 5 et ainsi orienter les roues 3.

Le circuit hydraulique comporte un bloc hydraulique 10, figuré symboliquement en pointillé, qui est connecté à une ligne de pression et à une ligne de retour du circuit hydraulique de l'aéronef via une vanne 11 commandée par un calculateur 50. Le bloc hydraulique 10 comporte quatre ports de sortie, couplés deux par deux, pour alimenter sélectivement les quatre chambres des deux vérins d'orientation 6 via des vannes rotatives 12. Le bloc hydraulique 10 comporte une servovalve 13 qui est commandée par le calculateur 50 pour distribuer la pression dans les vérins d'orientation 6 en réponse à un ordre d'orientation du pilote. Deux des ports de sortie du bloc hydraulique 10 sont associés à une première sortie 14 de la servovalve 13, et les deux autres ports sont associés à une deuxième sortie 15 de la servovalve 13.

Le bloc hydraulique 10 comporte des clapets de court-circuit 16 pour mettre les sorties 14,15 en court-circuit lorsque le bloc hydraulique 10 n'est pas alimenté (c'est-à-dire lorsque la vanne 11 est en position de mise au retour). La mise en court-circuit permet, lors d'une orientation forcée des roues, par exemple lors d'un remorquage, le transfert de fluide hydraulique des chambres des vérins 6 dont le volume diminue vers les chambres des vérins 6 dont le volume augmente. Le différentiel de volume est absorbé par un accumulateur 17 relié à un point central entre les clapets de court-circuit 16.

Les clapets de court-circuit 16 sont commandés hydrauliquement (voir la ligne 20 en pointillés courts) pour être fermés lorsque le bloc hydraulique 10 est mis sous pression, de sorte que les deux sorties 14,15 sont alors isolées. Pour compenser les différentiels de volume de fluide hydraulique, il est prévu d'alimenter l'une ou l'autre des sorties 14,15 par l'accumulateur 17 via des clapets anti-retour 18. Par ailleurs, des clapets de surpression 19 permettent de diriger un surplus de fluide hydraulique provenant des vérins 6 par l'une ou l'autre des sorties 14,15 vers l'accumulateur 17.

Pour garder l'accumulateur 17 sous pression et éviter qu'il ne se vide vers le retour, le bloc hydraulique 10 comporte un clapet taré 15 placé sur la ligne de retour du bloc hydraulique 10. Ce clapet taré 15 permet en outre de maintenir l'ensemble du bloc hydraulique 10 et des vérins 6 à la pression de tarage, supérieure à la pression de retour, ce qui évite toute cavitation dans le bloc hydraulique 10 et dans les vérins 6. Lorsque le bloc hydraulique 10 est sous pression, une ligne d'alimentation 21 permet, via un restricteur 22, de regonfler l'accumulateur 17 au cas où celui-ci se serait partiellement vidé.

Tout ceci est bien connu et est rappelé pour situer le contexte de l'invention.

L'invention vise à mettre la commande d'orientation en mode de libre orientation en réponse à la détection par le calculateur 50 d'une situation de remorquage dans laquelle l'aéronef est remorqué ou est susceptible d'être remorqué, et de réactiver la commande d'orientation lorsque l'aéronef quitte ou n'est pas dans la situation de remorquage. Une telle situation est détectée en surveillant un ou plusieurs paramètres de roulage (en pratique des signaux pouvant être combinés selon une logique prédéterminée), tels que la vitesse de l'aéronef, la commande d'un freinage, la vitesse angulaire d'orientation des roues...

En l'occurrence, ici, la libre orientation peut être obtenue par au moins l'un des deux moyens suivants:
- le calculateur 50 commande la vanne 11 pour la placer en position de mise au retour. Le bloc hydraulique 10 n'est plus soumis à la pression de l'aéronef, et les clapets de court-circuit 16 se placent en position de court-circuit. Lorsque l'aéronef est remorqué, ce qui peut conduire à une rotation forcée du collier 5, un transfert de fluide entre les chambres des vérins 6 dont le volume diminue et les chambres des vérins 6 dont le volume augmente se met en place via les clapets de court-circuit 16, le différentiel de volume étant stocké ou délivré par l'accumulateur 17. Ce moyen sera dénommé ci-après mise au retour du bloc hydraulique d'orientation;
- ou encore, le calculateur 50 commande la servovalve 13 pour rester en position neutre quelque soit l'ordre d'orientation provenant du pilote. La vanne 11 reste en position de mise sous pression, de sorte que le bloc hydraulique 10 reste alimenté et les clapets de court-circuit 16 restent fermés. Cependant, lorsque l'aéronef est remorqué, ce qui peut conduire à une rotation forcée du collier 5, un transfert de fluide entre les chambres des vérins 6 dont le volume diminue et les chambres des vérins 6 dont le volume augmente se met en place via les clapets anti-retour 18 et les clapets de surpression 19, le différentiel de volume étant stocké ou délivré par l'accumulateur 17. Selon une disposition particulière, si la servovalve est du type à découvrement, les transferts de fluides se font en partie au moins par les jours existant entre le tiroir de la servovalve et sa chemise lorsque le tiroir est maintenu en position neutre, ce qui évite de monter en pression dans le bloc hydraulique et de solliciter les clapets de surpression 19. La neutralisation de la servovalve permet donc la libre orientation des roues 3. Ce moyen sera dénommé ci-après neutralisation de la servovalve.

Eventuellement, les deux moyens peuvent être utilisés simultanément.

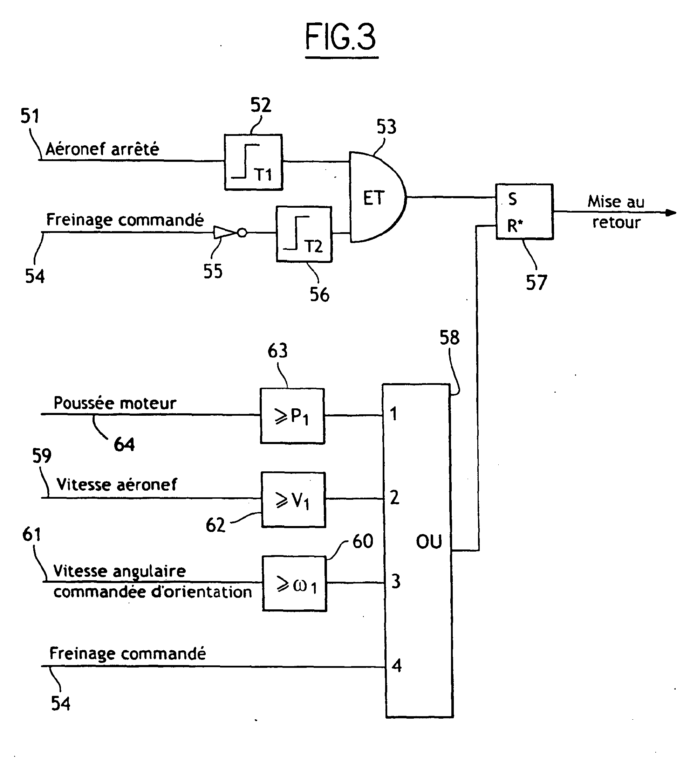

Conformément à un premier mode de mise en oeuvre du procédé de l'invention illustré à la figure 3, le calculateur 50 surveille un signal 51 d'arrêt de l'aéronef qui vaut 1 si l'aéronef est à l'arrêt (ou à une vitesse résiduelle très petite), et 0 si l'aéronef est en mouvement. Le signal d'arrêt 51 est fourni à un confirmateur à front montant 52 dont la sortie passe à 1 lorsque le signal d'arrêt 51 est resté à 1 pendant un temps T1, de l'ordre de quelques secondes. La sortie du confirmateur à front montant 52 est fournie à une première porte ET 53.

Par ailleurs, le calculateur 50 surveille un signal de freinage commandé 54, par exemple l'appui du pilote sur le palonnier, ou tout autre consigne de freinage provenant par exemple du calculateur de freinage de l'aéronef. Le signal de freinage 54 vaut 1 si un freinage est commandé. Le signal de freinage 54 est transmis à un inverseur 55, puis la sortie de l'inverseur 55 est transmise à un confirmateur à front montant 56. Ainsi, lorsque le freinage cesse d'être commandé, le signal de freinage passe à 0. La sortie de l'inverseur 55 passe à 1, tandis que la sortie du confirmateur à front montant 56 ne passe à 1 qu'au bout d'un temps T2, de l'ordre de quelque secondes, pendant lequel l'entrée du confirmateur à front montant 56 a été maintenue à 1. La sortie du confirmateur à front montant 56 forme la deuxième entrée de la porte ET 53.

La sortie de la première porte ET 53 forme la première entrée S d'une bascule 57. La sortie de la bascule 57 passe à 1 lorsque la première entrée S passe à 1, et la sortie de la bascule 57 reste à 1 quelque soit la valeur ultérieure de l'entrée S. Le passage à 1 de la sortie de la bascule 57 signifie que l'aéronef entre dans une situation potentielle de remorquage (aéronef arrêté depuis un certain temps, freins relâchés depuis un certain temps). Le passage à 1 de la sortie de la bascule 57 provoque alors la mise au retour du bloc hydraulique 10, de sorte qu'un remorquage puisse être éventuellement effectué sans que la commande d'orientation tente de contrer l'orientation forcée des roues par l'effet du remorquage.

La sortie de la situation de remorquage, c'est-à-dire la réactivation de la commande d'orientation, est effectuée en réponse à la détection d'un événement signalant que l'aéronef n'est manifestement plus dans la situation de remorquage. Pour ce faire, on utilise la deuxième entrée R* de la bascule, dont le passage à 1 provoque la remise à 0 de la sortie de la bascule 57, ce qui a pour effet de remettre la vanne 11 en position d'alimentation du bloc hydraulique 10.

Ici, on a choisi de surveiller quatre évènements particuliers:
- une commande de poussée moteurs au delà d'un seuil P1;
- une vitesse de déplacement l'aéronef au delà d'un seuil V1;
- une vitesse commandée d'orientation supérieure à un seuil ω1;
- la survenance d'un ordre de freinage.

En pratique, la deuxième entrée R* de la bascule 57 est formée par la sortie d'une porte OU 58 dont les quatre entrées sont les suivantes:
1. la sortie d'un comparateur 63 qui compare le signal de poussée moteurs 64 à un seuil de poussée P1 et qui renvoie une sortie égale à 1 si la poussée moteur 64 est supérieure au seuil P1. Le seuil de poussée P1 est choisi légèrement supérieur à la poussée de ralenti moteur;
2. la sortie d'un comparateur 62 qui compare le signal de vitesse de déplacement de l'aéronef 59 à un seuil de vitesse V1 et renvoie une sortie égale à 1 si la vitesse de déplacement de l'aéronef 59 est supérieure ou égale au seuil de vitesse V1. Le seuil V1 est en pratique choisi comme étant égal à la vitesse maximale de remorquage autorisée.
3. la sortie d'un comparateur 60 qui compare un signal de vitesse angulaire commandée d'orientation 61 à un seuil ω1 et renvoie une sortie égale à 1 si la vitesse angulaire commandée d'orientation est supérieure au seuil ω1, c'est-à-dire si le pilote via son volant ou le palonnier, ou le calculateur lui-même, a commandé un angle d'orientation de façon telle que la vitesse angulaire de rotation demandée est supérieure au seuil ω1. Le seuil ω1 est choisi en pratique faible, mais de préférence non nul, pour tenir compte d'un bruit résiduel affectant le signal. Bien évidemment, le signal de vitesse angulaire commandée d'orientation est un signal de vitesse absolue, ne tenant pas compte du sens de l'orientation commandée par le pilote;
4. le signal de freinage commandé 54.

Lorsque l'une des entrées de la porte OU 58 passe à 1, alors sa sortie passe à 1, ce qui a pour effet de réinitialiser la sortie de la bascule 57. La vanne 11 est alors remise en position d'alimentation. La commande d'orientation est réactivée.

Ainsi, en surveillant un ou plusieurs paramètres de roulage de l'aéronef, le calculateur 50 détecte une situation dans laquelle l'aéronef est susceptible d'être remorqué, et place la commande d'orientation dans le mode de libre orientation en réponse à cette détection de sorte qu'un remorquage puisse être effectivement réalisé sans risque de détérioration. La réactivation de la commande d'orientation est effectuée dès que le calculateur 50 reconnaît un événement indiquant que l'aéronef est manifestement sorti de la situation potentielle de remorquage.

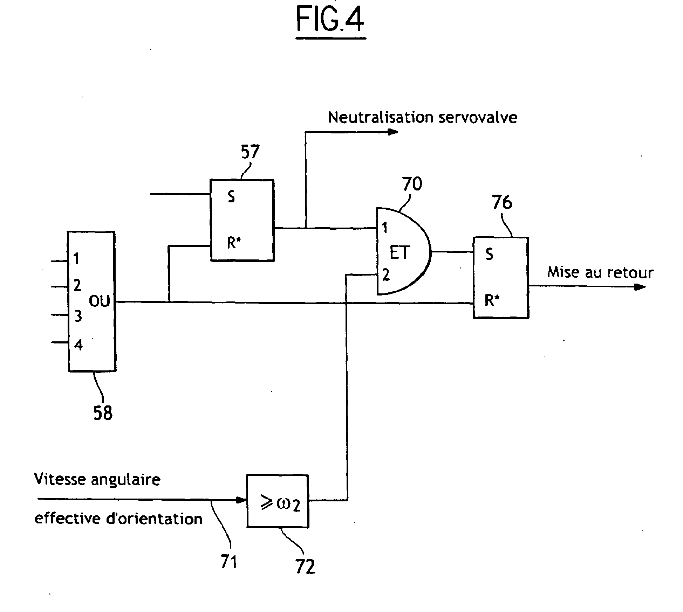

Selon une variante illustrée à la figure 4, on ne commande la mise au retour du bloc hydraulique que si l'on a détecté qu'un remorquage est effectivement en train d'être réalisé. Selon ce mode de mise en oeuvre, on neutralise la servovalve en réponse à la détection de la survenance de la situation potentielle de remorquage, et on met le bloc hydraulique au retour uniquement si l'on a détecté qu'un remorquage est en train d'être effectué. On évite ainsi des chutes de pression et des remises en pression qui fatiguent inutilement le bloc hydraulique et ses composants, ainsi que des actionnements inutiles de la vanne 11.

Pour ce faire, on réutilise entièrement la logique de la figure 3. Sur la figure 4, cette logique n'a pas été reprise en détail, mais on reconnaît la bascule 57 et la porte OU 58, dont les entrées respectives sont strictement identiques à celles illustrées à la figure 3.

Ici, cependant, la sortie de la bascule 57 provoque non plus la mise au retour du bloc hydraulique, mais, comme annoncé, la neutralisation de la servovalve 13.

Pour commander la mise au retour du bloc hydraulique 10, on utilise la sortie de la bascule 57 qui forme l'une des entrées d'une deuxième porte ET 70.

L'autre des entrées de la porte ET 70 est constituée par le signal suivant. Le calculateur 50 surveille le signal de vitesse angulaire effective d'orientation 71 (il convient de ne pas confondre ce signal de vitesse angulaire effective d'orientation 71 qui est la vitesse angulaire à laquelle le collier 5 tourne sur le caisson 1 en réponse soit à un ordre d'orientation soit à une orientation imposée par le tracteur, et le signal de vitesse angulaire commandée d'orientation 61, qui est la vitesse demandée ou déduite de l'ordre d'orientation donné par le pilote ou par le calculateur). Le signal de vitesse angulaire effective d'orientation 71 est fourni à un comparateur 72 qui compare la vitesse angulaire effective d'orientation 71 à un seuil ω2 et fournit une sortie égale à 1 si la vitesse angulaire effective d'orientation est supérieure à ce seuil. Bien évidement, on parle ici d'un signal absolu de vitesse angulaire effective d'orientation, ne tenant pas compte du sens d'orientation effectif.

La sortie du comparateur 72 forme la deuxième entrée de la porte ET 70. Lorsque la vitesse angulaire effective d'orientation 71 est plus grande que le seuil ω2, la deuxième entrée de la deuxième porte ET passe à 1, ce qui constitue, avec le fait qu'aucune orientation n'est commandée (entrée 3 de la porte OU 58), le signe qu'un remorquage est en train d'être effectué. Dans la mesure où la première entrée de la deuxième porte ET 70 est toujours à 1, la sortie de la deuxième porte ET 70 passe alors à 1.

La sortie de la porte ET 70 forme maintenant l'entrée S d'une deuxième bascule 76. La sortie de la deuxième bascule 76 passe à 1 lorsque la sortie de la porte ET 70 passe à 1 et y reste même si la sortie de la porte ET passe à 0. C'est maintenant la sortie de la bascule 76 qui provoque la mise au retour du bloc hydraulique 10. La sortie de la bascule 76 est réinitialisée lorsque sa deuxième entrée R* passe à 1. On constate ici que l'entrée R* de la deuxième bascule 76 est constituée par le même signal que l'entrée R* de la première bascule 57, à savoir la sortie de la porte OU 58.

Ainsi, dans un premier temps, lorsqu'une situation potentielle de remorquage est détectée, on se contente de neutraliser la servovalve 13, ce qui permet un éventuel remorquage en toute sécurité. Si aucun remorquage n'est effectué, et si l'un des évènements marquant la fin de la situation potentielle de remorquage intervient, alors la servovalve est réactivée, ce qui ne demande qu'un temps minimal. Le pilote retrouve donc une commande d'orientation activée très rapidement lorsqu'il quitte la situation potentielle de remorquage. En outre, le bloc hydraulique est resté sous pression et n'a de ce fait pas subi de baisse de pression et de remise en pression pouvant nuire à sa tenue en fatigue. Ce n'est que si le remorquage est effectivement réalisé, ce qui est signalé par la détection d'un signal de vitesse angulaire de rotation effective du collier, alors qu'aucune orientation n'est commandée (entrée 3 de la porte OU 58), que l'on place le bloc hydraulique 10 au retour.

Le bloc hydraulique 10 étant mis au retour, une activation intempestive de la servovalve 13 en cours de remorquage n'aurait aucun effet puisque le bloc hydraulique 10 n'est plus sous pression. Cette mise au retour du bloc hydraulique 10 assure une sécurité supplémentaire.

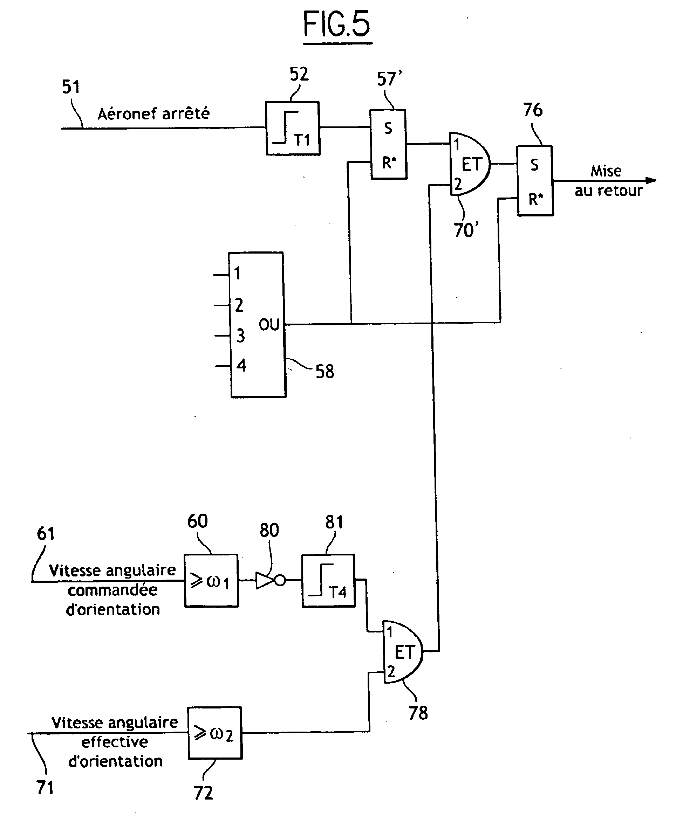

L'invention peut également être mise en oeuvre selon une autre logique illustrée à la figure 5. On y reconnaît la bascule 57' similaire à la bascule 57 des logiques précédentes. Cependant, la première entrée S de la bascule 57' est constituée directement du signal d'aéronef arrêté 51, traité par le confirmateur à front montant 52. La deuxième entrée R* de la basculé 57' est, comme dans les logiques précédentes, constituée par la sortie de la porte OU 58, qui comporte exactement les mêmes entrées.

La sortie de la bascule 57' est fournie à une porte ET 70' similaire à la porte ET 70 de la figure 4, si ce n'est que sa deuxième entrée est maintenant constituée de la sortie d'une porte ET auxiliaire 78, dont les deux entrées sont les suivantes:
1. le signal de vitesse angulaire commandée d'orientation 61 est soumis à un comparateur 60 qui compare la vitesse angulaire commandée d'orientation au seuil ω1. La sortie du comparateur 60 est fournie à un inverseur 80, et la sortie de l'inverseur 80 est fournie à un confirmateur à front montant 81 (dont le délai tient compte de la dynamique de la commande d'orientation), dont la sortie forme la première entrée de la porte ET auxiliaire 78;
2. le signal de vitesse angulaire effective d'orientation 71 est soumis à un comparateur 72 qui compare la vitesse angulaire effective d'orientation au seuil ω2. La sortie du comparateur 62 forme la deuxième entrée de la porte ET auxiliaire 78.

Comme auparavant, les signaux de vitesse angulaire effective ou commandée d'orientation sont considérés ici en valeur absolue.

La sortie de la porte ET 70' forme alors l'entrée S de la deuxième bascule 76, comme sur la figure 5. La deuxième entrée R* de la deuxième bascule est, comme auparavant, constituée de la sortie de la porte OU 58. Le passage de la sortie de la deuxième bascule 76 à 1 provoque la mise de la commande d'orientation en mode de libre orientation, ici par mise au retour du bloc hydraulique.

Le fonctionnement de cette logique est le suivant. Lorsque l'aéronef est arrêté depuis un temps T1, la sortie de la bascule 70 passe à 1. L'aéronef est alors dans une situation intermédiaire dans laquelle il pourrait être remorqué. Cependant, on a choisi ici de ne pas placer la commande d'orientation en mode de libre orientation en réponse à la détection du simple arrêt de l'aéronef. En effet, si l'aéronef est par la suite remorqué en ligne droite, la commande d'orientation peut rester activée, ce qui ne gêne pas le remorquage en ligne droite. Cependant, cette capacité à être remorqué en ligne droite est évidemment insuffisante dans la plupart des cas de figures de remorquage réel, dans lesquelles le tracteur fait effectuer des virages à l'aéronef. On ne peut donc considérer le remorquage en ligne droite comme un véritable remorquage. On choisit donc de placer la commande d'orientation en mode de libre orientation uniquement si un véritable remorquage avec virages est entrepris. Pour cela, on détecte (via les portes ET 78 et 70') les conditions supplémentaires suivantes:
- la vitesse angulaire commandée d'orientation 61 n'a pas dépassé le seuil ω1 depuis au moins le temps T4 associé à un confirmateur 81, et
- la vitesse angulaire effective d'orientation 71, celle qui est par exemple imposée aux roues et au collier par le tracteur en train de tourner, est supérieure au seuil ω2.

Ainsi, on fait passer la commande d'orientation en mode de libre orientation en réponse à la détection d'une situation de remorquage avérée. La commande d'orientation reste ainsi constamment active, sauf si un remorquage véritable (c'est-à-dire incluant des virages) est effectivement entrepris.

Ainsi, dans les différentes logiques illustrées, on surveille un certain nombre de paramètres de roulage pour détecter une situation de remorquage potentielle ou avérée, et on désactive la commande d'orientation en réponse à cette détection. La réactivation de la commande d'orientation est réalisée en réponse à la détection d'un événement qui indique que l'aéronef est sorti de la situation de remorquage.

On remarquera que la détection selon l'invention d'un événement signalant la fin de la situation de remorquage permet de palier à une défaillance du calculateur qui aurait placé par erreur la commande d'orientation en mode de libre orientation alors que l'aéronef n'est pas dans une situation de remorquage. En effet, lors d'une phase de roulage non remorqué (par exemple à l'atterrissage ou lors d'un déplacement autonome sur les taxiways de l'aéroport) les signaux surveillés pour détecter un événement signalant la fin de la situation de remorquage sont également indicateurs d'une telle phase de roulage: la sortie de la porte OU 58 passe forcément à 1 à un moment ou à un autre du roulage, par exemple dès que la vitesse de l'aéronef dépasse le seuil V1 ou dès que la poussée des réacteurs dépasse le seuil P1. La ou les bascules sont alors réinitialisées, ce qui provoque la réactivation de la commande d'orientation.

Le pilote est ainsi assuré que la commande d'orientation sera activée automatiquement, soit à la fin de la situation de remorquage, soit après un passage intempestif en mode de libre rotation, de sorte que le risque de ne pas disposer de la commande d'orientation lors d'une phase où elle peut être nécessaire est très réduit.

A cet égard, il importe de remarquer que la situation de remorquage est reconnue par une combinaison de paramètres de roulage (signaux 51,54 sur les figures 3 et 4, signaux 51,61,71 sur la figure 5) qui n'est pas la même que la combinaison de paramètres de roulage qui signale la sortie de la situation de remorquage ou la non-présence dans celle-ci (signaux 64,59,61,54 sur les figures 3,4 et 5). Ainsi, on évite de se retrouver dans la situation de l'art antérieur consistant à utiliser un seul paramètre (valeur du signal du capteur lié au levier) pour décider s'il faut activer ou désactiver la commande d'orientation. On peut dans ce cas obtenir des désactivations ou des activations intempestives si le signal est peu fiable.

En choisissant selon l'invention deux combinaisons distinctes de paramètres de roulage pour reconnaître si l'aéronef est dans une situation de remorquage ou n'est pas dans une situation de remorquage, on évite de faire dépendre la gestion de la commande d'orientation de la valeur d'un seul signal, qu'il soit surveillé ou construit à l'aide de portes logiques.

L'invention n'est pas limitée à ce qui vient d'être décrit, mais bien au contraire englobe toute variante entrant dans le cadre défini par les revendications.

En particulier, bien que l'on ait illustré l'invention en relation avec une commande hydraulique d'orientation, l'invention s'applique bien évidemment à un aéronef comportant une commande électrique d'orientation.

Bien que dans les logiques illustrées, on utilise des signaux de vitesse angulaire effective d'orientation et de vitesse angulaire commandée d'orientation, ces signaux pourront bien sûr être recomposés en dérivant respectivement les signaux d'angle effectif d'orientation et d'angle commandé d'orientation, filtrés de façon adéquate.

Il est bien évident que les signaux utilisés subiront tous les traitements adéquats avant d'être traités par la logique de gestion de la commande d'orientation (filtrage, débruitage), ainsi que cela est bien connu de l'homme du métier.

## Revendications

1. Procédé de gestion par un calculateur (50) de l'aéronef de la commande d'orientation d'un atterrisseur d'aéronef pourvu d'au moins une roue orientable par la commande d'orientation, le calculateur effectuant les opérations suivantes :
- surveiller plusieurs paramètres de roulage (51,54,64,59,61 ;51,54,69,59,61,71) de l'aéronef, dont au moins un choisi parmi la vitesse de l'aéronef, la commande d'un freinage, la vitesse angulaire d'orientation des roues, et effectuer une ou des combinaisons logiques de ces paramètres de roulage pour déterminer si l'aéronef entre dans ou sort d'une situation de remorquage ;
- placer la commande d'orientation dans un mode de libre orientation de la roue orientable si l'aéronef entre dans la situation de remorquage ;
- activer la commande d'orientation de sorte que la roue orientable ait une orientation angulaire contrôlée par la commande d'orientation si l'aéronef sort de la situation de remorquage.

2. Procédé selon la revendication 1, dans lequel on procède à une première combinaison logique de plusieurs paramètres de roulage pour définir un évènement dont la survenance marque l'entrée de l'aéronef dans la situation de remorquage.

3. Procédé selon la revendication 2, dans lequel on procède à une deuxième combinaison logique de plusieurs paramètres de roulage distincte de la première combinaison de l'aéronef pour définir un évènement dont la survenance marque la sortie de l'aéronef de la situation de remorquage.

4. Procédé selon la revendication 1, dans lequel la situation de remorquage correspond à une situation de remorquage potentiel dans laquelle l'aéronef est susceptible d'être remorqué.

5. Procédé selon la revendication 4, dans lequel l'aéronef entre dans la situation de remorquage potentiel lorsque l'évènement suivant est détecté :
- l'aéronef a été arrêté pendant un certain temps; (51,52) ET
- aucun freinage n'est commandé depuis un certain temps (54,55,58).

6. Procédé selon la revendication 5, appliqué à une commande d'orientation hydraulique comportant une servovalve (13), dans lequel la commande d'orientation est placée dans le mode de libre orientation en neutralisant la servovalve.

7. Procédé selon la revendication 6, dans lequel la commande d'orientation est en outre mise au retour hydraulique si, après neutralisation de la servovalve, on détecte qu'une vitesse angulaire effective d'orientation des roues (71,72) est supérieure à un seuil prédéterminé.

8. Procédé selon la revendication 1, dans lequel la situation de remorquage correspond à une situation de remorquage avéré lors de laquelle un remorquage est effectivement entrepris.

9. Procédé selon la revendication 8, dans laquelle l'aéronef entre dans la situation de remorquage avéré lors d'un changement d'état de la combinaison suivante de paramètres de roulage :
- l'aéronef a été arrêté pendant un certain temps (51,52); ET
- la vitesse angulaire effective d'orientation des roues est supérieure à un seuil prédéterminé (71,72); ET
- la vitesse angulaire commandée d'orientation des roues n'est pas restée supérieure à un seuil prédéterminé pendant un certain temps (61,60,80,81).

10. Procédé selon la revendication 1, dans lequel la situation de non-remorquage correspond à la détection de l'un des évènements suivants:
- la poussée des moteurs est supérieure à une seuil prédéterminé (63,64);
- la vitesse de déplacement de l'aéronef est supérieure à un seuil prédéterminé (59,62);
- la vitesse angulaire commandée d'orientation est supérieure à un seuil prédéterminé (60,61);
- un freinage est commandé (54).

## Claims

1. A method for managing a steering control of an aircraft landing gear provided with at least one steerable wheel through the steering control, said method being run by a computer (50) of the aircraft and comprising:
- monitoring several taxi parameters (51, 54, 64, 59, 61; 51, 54, 64, 59, 61, 71) of the aircraft, at least one of these taxi parameters being chosen in the group of the aircraft speed, a braking command, the steering angular velocity of the wheels, and proceeding to one or several logic combinations of these taxi parameters to determine whether the aircraft enters or leaves a towing situation;
- setting the steering control in a free steering mode of the steerable wheel, if the aircraft enters said towing situation;
- activating the steering controls so that the steerable wheel has an angular steering controlled by the steering control if the aircraft leaves said towing situation.

2. A method according to claim 1, wherein a first logic combination of several taxi parameters is performed to define an event, the occurrence of which indicates that the aircraft enters said towing situation.

3. A method according to claim 2, wherein a second logic combination of several aircraft taxi parameters, which is different from the first combination, is performed to define an event, the occurrence of which indicates that the aircraft leaves said towing situation.

4. A method according to claim 3, wherein the towing situation corresponds to a potential towing situation, in which the aircraft is likely to be towed.

5. A method according to claim 4, wherein the aircraft enters the potential towing situation, when the following event is detected:
- the aircraft has stopped for some time (51, 52) AND
- no braking control has been activated for some time (54, 55, 58).

6. A method according to claim 5, applied to a hydraulic steering control comprising a servovalve (13), wherein the steering control is placed in the free steering mode by neutralizing the servovalve.

7. A method according to claim 6, wherein the steering control is further placed in the hydraulic return position if, after neutralizing the servovalve, it is detected that the steering effective angular velocity of wheels (71, 72) is above a predetermined threshold.

8. A method according to claim 3, wherein the towing situation corresponds to an effective towing situation during which a towing is effectively in process.

9. A method according to claim 8, wherein the aircraft enters the effective towing situation when the following event is detected:
- the aircraft has stopped for some time (51, 52); AND
- the steering effective angular velocity of the wheels exceeds a predetermined threshold (71, 72); AND
- the controlled steering angular velocity of the wheels did not remain above the predetermined threshold for some time (61, 60, 80, 81).

10. A method according to claim 3, wherein the aircraft leaves the towing situation corresponds when the following event is detected:
- the engine thrust exceeds a predetermined threshold (63, 64); OR
- the taxi speed of the aircraft exceeds a predetermined threshold (59, 62);
- the controlled steering angular velocity exceeds a predetermined threshold (60, 61);
- the braking control has been activated (54).

## Patentansprüche

1. Verfahren zum Führen der Lenksteuerung eines Flugzeugfahrwerks durch einen Rechner (50) des Flugzeugs, wobei das Fahrwerk mit mindestens einem durch die Lenksteuerung lenkbaren Rad versehen ist, wobei der Rechner die folgenden Operationen ausführt:
- Überwachen mehrerer Fahrparameter (51, 54, 64, 59, 61; 51, 54, 64, 59, 61, 71) des Flugzeugs, von denen mindestens einer ausgewählt ist aus der Geschwindigkeit des Flugzeugs, der Steuerung einer Bremse, der Winkelgeschwindigkeit zum Lenken der Räder, und Durchführen von einer oder mehr logischen Kombinationen dieser Fahrparameter, um zu bestimmen, ob das Flugzeug in eine Schleppsituation eintritt oder aus einer solchen austritt,
- Versetzen der Lenksteuerung in einen Modus einer freien Lenkung des lenkbaren Rades, wenn das Flugzeug in die Schleppsituation eintritt,
- Aktivieren der Lenksteuerung, derart, dass das lenkbare Rad eine Winkelausrichtung hat, die von der Lenksteuerung gesteuert wird, wenn das Flugzeug die Schleppsituation verlässt.

2. Verfahren nach Anspruch 1, wobei man eine erste logische Kombination mit mehreren Fahrparametern durchführt, um ein Ereignis zu definieren, dessen Auftreten den Eintritt des Flugzeugs in die Schleppsituation kennzeichnet.

3. Verfahren nach Anspruch 2, wobei man eine zweite logische Kombination mit mehreren Fahrparametern durchführt, die sich von der ersten Kombination des Flugzeugs unterscheidet, um ein Ereignis zu definieren, dessen Auftreten den Austritt des Flugzeugs aus der Schleppsituation kennzeichnet.

4. Verfahren nach Anspruch 1, wobei die Schleppsituation einer möglichen Schleppsituation entspricht, in der das Flugzeug dazu geeignet ist, geschleppt zu werden.

5. Verfahren nach Anspruch 4, wobei das Flugzeug in die mögliche Schleppsituation eintritt, wenn das folgende Ereignis erfasst wird:
- das Flugzeug wurde eine bestimmte Zeit lang angehalten (51, 52) UND
- ab einer bestimmten Zeit wurde keine Bremsung gesteuert (54, 55, 58).

6. Verfahren nach Anspruch 5, angewandt bei einer hydraulischen Lenksteuerung, die ein Servoventil (13) umfasst, wobei die Lenksteuerung in den Modus der freien Lenkung gebracht wird, indem das Servoventil neutralisiert wird.

7. Verfahren nach Anspruch 6, wobei die Lenksteuerung ferner auf den hydraulischen Rücklauf umgeschaltet wird, wenn man nach der Neutralisierung des Servoventils feststellt, dass eine effektive Winkelgeschwindigkeit zum Lenken der Räder (71, 72) größer als ein vorgegebener Schwellenwert ist.

8. Verfahren nach Anspruch 1, wobei die Schleppsituation einer erwiesenen Schleppsituation entspricht, bei der ein Schleppen tatsächlich begonnen wird.

9. Verfahren nach Anspruch 8, wobei das Flugzeug in die erwiesene Schleppsituation während eines Zustandswechsels der folgenden Kombination von Fahrparametern eintritt:
- das Flugzeug wurde eine bestimmte Zeit lang angehalten (51, 52), UND
- die effektive Winkelgeschwindigkeit zum Lenken der Räder ist größer als ein vorgegebener Schwellenwert (71, 72), UND
- die gesteuerte Winkelgeschwindigkeit zum Lenken der Räder bleibt nicht für eine bestimmte Zeit über einem vorgegebenen Schwellenwert (61, 60, 80, 81).

10. Verfahren nach Anspruch 1, wobei die Nicht-Schleppsituation der Erfassung eines der folgenden Ereignisse entspricht:
- der Schub der Motoren ist größer als ein vorgegebener Schwellenwert (63, 64),
- die Bewegungsgeschwindigkeit des Flugzeugs ist größer als ein vorgegebener Schwellenwert (59, 62),
- die gesteuerte Winkelgeschwindigkeit zum Lenken ist größer als ein vorgegebener Schwellenwert (60, 61),
- eine Bremsung wird gesteuert (54).
